# EUROPÄISCHE PATENTSCHRIFT

(11) **EP 1 878 349 B1**
(45) Veröffentlichungstag und Bekanntmachung des Hinweises auf die Patenterteilung: **11.06.2008**
(21) Anmeldenummer: 06012916.0
(22) Anmeldetag: 23.06.2006
(51) Int. Cl.: A23C 1/04, A23C 9/142, A23C 21/00, A23J 1/20, A23J 3/08

(54) **Verfahren zur Herstellung von Molkenpermeatpulver**
Process for the preparation of whey permeate powder
Procédé de préparation de poudre de perméate de lactosérum

(43) Veröffentlichungstag der Anmeldung: 16.01.2008
(73) Patentinhaber: Molkerei Alois Müller GmbH & Co. KG, 86850 Aretsried (DE)
(72) Erfinder: Cloidt, Roland, 01454 Radeberg (DE); Lehmann, Hanno, 59846 Sundern (DE)
(74) Vertreter: Busch, Thomas

(56) Entgegenhaltungen:
- EP-A- 0 536 612
- FR-A- 2 493 679
- US-A- 4 001 198
- US-A- 6 048 565
- US-A1- 2004 191 381
- CARIC, MARIJANA: "Concentrated and dried dairy products" 1994, VCH PUBLISHERS , NEW YORK , XP002400981 * Seite 153 - Seite 160 * * Seite 162 - Seite 163 *

## Beschreibung

Die Erfindung betrifft ein Verfahren, bei dem Molke durch Ultrafiltration Eiweiß entzogen wird, dem so gewonnenen Permeat durch ein Membrantrennverfahren, oder eine Elektrodialyse und/oder durch Eindampfen Wasser entzogen wird, die Konzentration des erhaltenen Retentats durch Eindampfen auf ungefähr 60% Trockenmasse erhöht wird, die Konzentration in einem weiteren Schritt auf 70 bis 85% Trockenmasse erhöht wird, und das Konzentrat in einem Sprühtrockner getrocknet wird.

Wenn bei der Herstellung von Permeatpulver die Sprühtrocknung nach dem Eindampfen des Retentats durchgeführt wird, zeigt sich aufgrund der geringen Trockenmasse des Produktes eine eingeschränkte Stundenleistung des Sprühtrockners. Es wurde deshalb bereits versucht, die Konzentration des Retentats nach dem Eindampfen mit Hilfe eines thermischen Hochkonzentrators weiter zu erhöhen. Der durch diese Maßnahme erzielbaren Steigerung der Stundenleistung des Sprühtrockners stehen jedoch die hohen Investitionskosten eines Hochkonzentrators und sein hoher Energieverbrauch entgegen.

Die FR-A-2493679 offenbart ein Verfahren zur Herstellung von Permeatpulver, bei dem Molke ultrafiltriert und sodann eingedampft wird. Das dabei erhaltene Konzentrat wird durch Zentrifugieren getrennt in grobe Laktosekristalle und in eine feine Laktokristalle enthaltende flüssige Phase. Die abgetrennten groben Laktosekristalle werden ausgeschieden, und ein Teil der flüssigen Phase wird sprühgetrocknet, während der restliche Teil neuerlich eingedampft und zentrifugiert wird.

Die US 2004/191381 offenbart ein Verfahren zur Umwandlung von Molke in Pulver, bei dem Molke eingedampft und das dabei erhaltene Konzentrat in zwei Teilströme aufgeteilt wird. Während der eine Teilstrom sprühgetrocknet wird, wird der andere Teilstrom zurückgeführt und neuerlich eingedampft.

Die US-A-6048565 offenbart ein Verfahren zur Umwandlung von Molke in Pulver, bei dem ein kristallisierter Teilstrom von dem kristallisierten Produkt abgetrennt, mit dem gekühlten Molkekonzentrat vermischt und dieses Gemisch anschließend weiter kristallisiert wird.

Die US-A-4001198 offenbart ein Verfahren zur Gewinnung von Laktose aus Molke durch Entziehen von Eiweiß, Ultrafiltration mit Membranen, die für Milchzucker undurchlässig sind, zweifaches Aufkonzentrieren des erhaltenen Molkezuckerkonzentrats und anschließendes Trocknen desselben.

Der Erfindung liegt die Aufgabe zugrunde, ein Verfahren zur Herstellung von Permeatpulver zu schaffen, das eine hohe Wirtschaftlichkeit aufweist.

Erfindungsgemäß wird diese Aufgabe mit einem Verfahren der eingangs genannten Gattung gelöst, das dadurch gekennzeichnet ist, daß das Konzentrat nach dem Eindampfen in einem Dekanter mechanisch getrennt wird in ein kristallines Konzentrat mit 85 bis 95% Trockenmasse und in eine flüssige Phase mit 30 bis 40% Trockenmasse, daß die Konzentration der flüssigen Phase durch Eindampfen auf 50 bis 60% Trockenmasse erhöht wird, daß ein Teil der hochkonzentrierten flüssigen Phase bei dem kontinuierlich durchgeführten Herstellungsprozeß dem kristallinen Konzentrat beigemischt wird, so daß das erhaltene Gemisch eine Konzentration von 70 bis 85% Trockenmasse aufweist, und daß dieses Gemisch im Sprühtrockner getrocknet wird.

Im Vergleich zu einem thermischen Hochkonzentrator sind die Investitionskosten und der Energieaufwand eines Dekanters gering. Das in dem Dekanter mechanisch abgetrennte kristalline Konzentrat hat einen Gehalt an Mineralien (Asche) von ungefähr 1 %, wogegen die abgetrennte flüssige Phase einen Mineralgehalt von 10 bis 12% hat. Die Hygroskopizität des erhaltenen Permeatpulvers und damit seine Neigung zur Klumpenbildung steigt mit dem Anteil amorpher Laktose. Bei dem erfindungsgemäßen Verfahren kann die Hygroskopizität des Permeatpulvers über den Anteil der rezirkulierten hochkonzentrierten flüssigen Phase beeinflußt werden. Je größer dieser Anteil ist, desto größer ist die Hygroskopizität des erhaltenen Molkepulvers und damit seine Neigung zur Klumpenbildung.

Ein günstiger Kompromiß hinsichtlich der Wirtschaftlichkeit des Verfahrens und einer geringen Hygroskopizität des Permeatpulvers kann erreicht werden, wenn der Aschegehalt des Permeatpulvers 3 bis 5% beträgt.

Ein Ausführungsbeispiel der Erfindung wird nachfolgend näher erläutert.

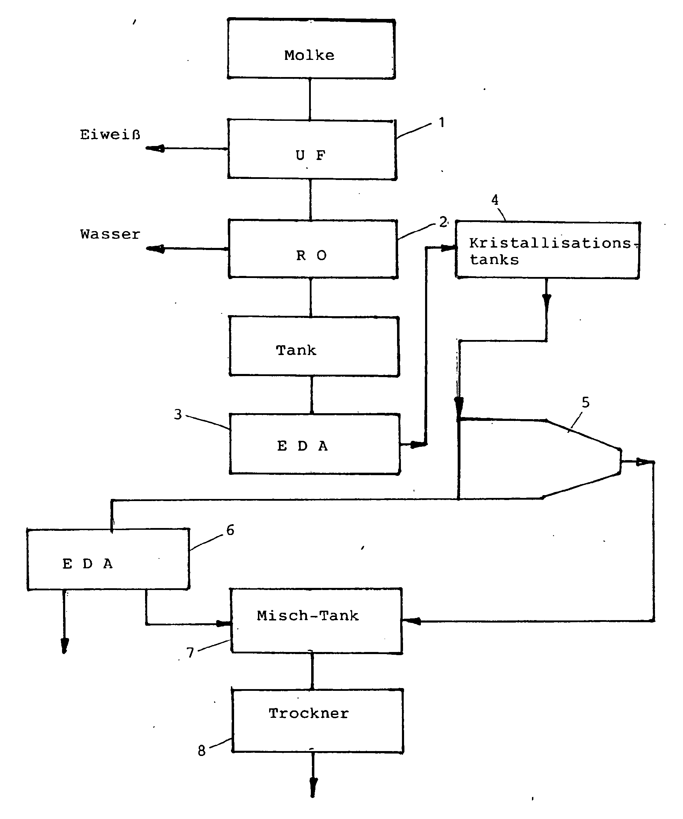

In der einzigen Figur der Zeichnung sind die einzelnen Schritte eines Verfahrens zur Herstellung von Permeatpulver schematisch dargestellt und entsprechend ihrer zeitlichen Reihenfolge fortlaufend nummeriert.

Der als Ausgangsstoff dienenden Molke, die beispielsweise bei der Herstellung von Käse anfällt, wird in einem ersten Verfahrensschritt durch Ultrafiltration Eiweiß entzogen. Dem so gewonnenen Permeat wird sodann in einem zweiten Verfahrensschritt durch ein Membrantrennverfahren oder eine Elektrodialyse und/oder ein Eindampfverfahren Wasser entzogen. Das dadurch gewonnene Retentat kann in einem Tank zwischengelagert werden. In einem dritten Verfahrensschritt wird die Konzentration des Retentats durch Eindampfen auf 60 - 65% Trockenmasse erhöht. Das konzentrierte Retentat wird sodann in einem vierten Arbeitsschritt über einen gesteuerten Temperatur - Zeit Verlauf kristallisiert. In einem fünften Arbeitsschritt wird das kristallisierte Konzentrat in einem Dekanter in ein Konzentrat mit 85 - 95% Trockenmasse und in eine flüssige Phase mit 30 - 40% Trockenmasse mechanisch getrennt. In einem sechsten Verfahrensschritt wird die Konzentration der flüssigen Phase durch Eindampfen auf 50 - 60% Trockenmasse erhöht. Bei der Durchführung des sechsten Arbeitsschrittes wird ein Teil der flüssigen Phase, die sogenannten Brüden, abgeschieden.

In einem siebten Arbeitsschritt wird sodann die hochkonzentrierte flüssige Phase anteilsmäßig dem beim fünften Arbeitsschritt in dem Dekanter abgetrennten kristallinen Konzentrat beigemischt, so daß ein Gemisch mit 75 -80% Trockenmasse und weniger als 5% Asche erhalten wird. Dieses Gemisch wird in einem achten Verfahrensschritt in einem Sprühtrockner getrocknet, so daß ein Permeatpulver mit 98% Trockenmasse und 4 bis 5% Asche gewonnen wird.

Bei einem Versuchsbeispiel wurden im dritten Verfahrensschritt 8.163 kg/h konzentriertes Retentat mit 60% Trockenmasse erzeugt. Dieses konzentrierte Retentat wurde beim fünften Verfahrensschritt getrennt in 3.841 kg/h kristallines Konzentrat mit 90% Trockenmasse und 1% Asche und in 4.322 kg/h flüssige Phase mit 34% Trockenmasse, davon 10% Asche. Die flüssige Phase wurde beim sechsten Verfahrensschritt getrennt in 1.383 kg/h Brüden und 2.939 kg/h hochkonzentrierte flüssige Phase mit 50% Trockenmasse. Durch das Mischen eines Teils der hochkonzentrierten flüssigen Phase mit dem kristallinen Konzentrat wurden 5208 kg/h Gemisch mit 80% Trockenmasse und ca. 3,7% Asche erhalten. Nach dem Sprühtrocknen des Gemischs wurden 4.225 kg Permeatpulver mit 98% Trockenmasse und 4,3% Asche erreicht.

Da der Aschegehalt der beim fünften Verfahrensschritt im Dekanter abgetrennten flüssigen Phase wesentlich größer ist als derjenige des kristallinen Konzentrats, kann der Aschegehalt des nach dem Sprühtrocknen erhaltenen Permeatpulvers über das Mischungsverhältnis der hochkonzentrierten flüssigen Phase mit dem kristallinen Konzentrat verändert werden. Mit zunehmendem Anteil der rezirkulierten hochkonzentrierten flüssigen Phase steigt der Aschegehalt und der Anteil an amorpher Laktose in der Mischung und damit die Hygroskopizität des erhaltenen Permeatpulvers.

## Patentansprüche

1. Verfahren zur Herstellung von Permeatpulver, bei dem Molke durch Ultrafiltration Eiweiß entzogen wird, dem so gewonnenen Permeat durch ein Membrantrennverfahren oder eine Elektrodialyse und/oder ein Eindampfverfahren Wasser entzogen wird, die Konzentration des erhaltenen Retentats durch Eindampfen auf ungefähr 60% Trockenmasse erhöht wird, die Konzentration in einem weiteren Schritt auf 70 bis 85% Trockenmasse erhöht wird, und das Konzentrat in einem Sprühtrockner getrocknet wird,
**dadurch gekennzeichnet,**
**daß** das Konzentrat nach dem Eindampfen in einem Dekanter mechanisch getrennt wird in ein kristallines Konzentrat mit 85 bis 95% Trockenmasse und in eine flüssige Phase mit 30 bis 40% Trockenmasse,
**daß** die Konzentration der flüssigen Phase durch Eindampfen auf 50 bis 60% Trockenmasse erhöht wird,
**daß** ein Teil der hochkonzentrierten flüssigen Phase bei dem kontinuierlich durchgeführten Herstellungsprozeß dem kristallinen Konzentrat beigemischt wird, so daß das erhaltene Gemisch eine Konzentration von 70 bis 85% Trockenmasse aufweist, und
**daß** dieses Gemisch im Sprühtrockner getrocknet wird.

2. Verfahren nach Anspruch 1, **dadurch gekennzeichnet, daß** dem kristallinen Konzentrat ein solcher Teil der flüssigen Phase beigemischt wird, daß der Aschegehalt des durch Sprühtrocknen des Gemisches erhaltenen Permeatpulvers 3 bis 15% beträgt.

## Claims

1. Process for producing a permeate powder, in which albumin is extracted from whey by means of ultrafiltration, water is extracted from the permeate gained in this way by means of a membrane separation process or electro-dialysis and/or an evaporation process, the concentration of the retentate is increased to approximately 60% dry matter by means of evaporation, the concentration is increased in a further stage to 70 to 85% and the concentrate is dried in a spray dryer,
**characterized in that**
the concentrate, after evaporation, is mechanically separated in a decanter into a crystalline concentrate with 85 to 95% dry matter and a liquid phase with 30 to 40% dry matter,
the concentration of the liquid phase is increased by evaporation to 50 to 60% dry matter,
a part of the highly concentrated liquid phase has crystalline concentrate mixed with it in the continuously operated manufacturing process, such that the mixture obtained has a concentration of from 70 to 85% dry matter and,
**in that** this mixture is dried in the spray dryer.

2. Process in accordance with claim 1, **characterized in that** the crystalline concentrate has a portion of the liquid phase mixed with it such that the ash content of the permeate powder obtained by spray drying is 3 to 15%.

## Revendications

1. Procédé de fabrication de perméat de lactosérum en poudre, dans lequel on débarrasse le lactosérum de ses protéines par ultrafiltration, on chasse l'eau du perméat ainsi obtenu, par un procédé de séparation sur membrane ou une électrodialyse et/ou un procédé d'évaporation, on accroît par évaporation la concentration du rétentat ainsi obtenu jusqu'à environ 60 % de matière sèche, on augmente cette concentration lors d'une étape supplémentaire jusqu'à 70 à 85 % de matière sèche, et l'on fait sécher le concentré dans un sécheur à pulvérisation, lequel procédé est **caractérisé en ce que :**
- après l'évaporation, on sépare mécaniquement le concentré dans un décanteur, ce qui donne un concentré cristallin renfermant 85 à 95 % de matière sèche et une phase liquide renfermant 30 à 40 % de matière sèche,
- on augmente par évaporation la concentration de cette phase liquide jusqu'à 50 à 60 % de matière sèche,
- dans le processus de fabrication mené en continu, on combine une fraction de la phase liquide très concentrée au concentré cristallin, de sorte que le mélange ainsi obtenu présente une concentration de 70 à 85 % de matière sèche,
- et l'on fait sécher ce mélange dans un sécheur à pulvérisation.

2. Procédé selon la revendication 1, **caractérisé en ce que** la fraction de la phase liquide que l'on combine au concentré cristallin est telle que le perméat de lactosérum en poudre, qui est produit par séchage par pulvérisation du mélange ainsi obtenu, présente une teneur en cendres de 3 à 15 %.
